# EUROPÄISCHE PATENTSCHRIFT

(11) **EP 0 868 841 B1**
(45) Veröffentlichungstag und Bekanntmachung des Hinweises auf die Patenterteilung: **02.06.2004**
(21) Anmeldenummer: 98105252.5
(22) Anmeldetag: 24.03.1998
(51) Int. Cl.: A01C 7/08, A01C 15/04

(54) **Vorrichtung zum Verteilen von partikelförmigem Gut**
Apparatus for distributing granular material
Dispositif pour épandre des materiaux granulaires

(30) Priorität: 03.04.1997 DE 29705999 U
(43) Veröffentlichungstag der Anmeldung: 07.10.1998
(73) Patentinhaber: Kverneland ASA, 4355 Kvernaland (NO)
(72) Erfinder: Fano, Reinhard, 72663 Grossbettlingen (DE); Sorg, Friedrich, 35418 Buseck-Opperod (DE)
(74) Vertreter: Manitz, Finsterwald & Partner

(56) Entgegenhaltungen:
- DE-C- 4 411 240
- FR-A- 1 569 181
- FR-A- 2 406 382

## Beschreibung

Die vorliegende Erfindung betrifft eine Vorrichtung zum Verteilen von partikelförmigem Gut nach dem Oberbegriff von Anspruch 1.

Derartige Vorrichtungen werden beispielsweise bei Sämaschinen verwendet, die einen Vorratsbehälter für das Saatgut aufweisen, aus dem das Saatgut auf eine Vielzahl von Säschare verteilt werden soll. Hierfür weisen diese Vorrichtungen ein Gebläse auf, welches einen Luftstrom zum Transport des Saatgutes erzeugt, welches aus dem Vorratsbehälter über eine Dosiereinrichtung in den Luftstrom gelangt.

Der Luftstrom ist zum Verteiler geführt, wo er in eine der Anzahl der Säschare entsprechende Zahl von Teilströmen aufgeteilt wird. Bei gleichmäßiger Verteilung des Saatguts im Luftstrom wird aufgrund der gleichmäßigen Verteilung der Austrittsöffnungen über den Umfang des Verteilergehäuses auch eine gleichmäßige Aufteilung des Saatgutes auf die Säschare erreicht.

In bestimmten Anwendungsfällen ist jedoch eine gleichmäßige Aufteilung des Saatgutes auf die Säschare nicht erwünscht. So wird oftmals eine halbseitige Abschaltung der Säschare beim Fahren der letzten, randseitigen Spur eines Ackers gewünscht.

Es ist bekannt, einen Teil der Säschare stillzulegen, indem in den Saatgutleitungen zwischen Verteilergehäuse und Säschare Absperrventile vorgesehen werden. Dies ist in der Herstellung aufwendig und daher kostenintensiv. Außerdem sammeln sich bei Abschaltung einzelner Scharen in den jeweiligen Leitungen zwischen Verteilergehäuse und Absperrventil Restmengen von Saatgut an, die bei Wiedereinschalten auf einmal ausgebracht werden.

Aus der DE-C-44 11 240 ist eine Vorrichtung zum Verteilen von Saatgut und/oder Dünger bekannt, bei welcher das Abschalten einzelner Säschare im Verteilerkopf erfolgt. Hierfür sind im Verteilerkopf vertikal bewegbare Schieber vorgesehen, die unmittelbar vor den Austrittsöffnungen für die Teilströme angeordnet sind und in ihrer abgesenkten Schließposition die jeweilige Austrittsöffnung vollständig versperren.

Damit kann eine gute Absperrung einzelner Austrittsöffnungen und damit eine Abschaltung einzelner Säschare erreicht werden, ohne dass sich in den zugehörigen Leitungen Restmengen von Saatgut sammeln können, die bei Wiedereinschalten auf einmal ausgebracht würden.

Der vorliegenden Erfindung liegt die Aufgabe zugrunde, eine gleichzeitige Abschaltung mehrerer Säschare, insbesondere eine halbseitige Abschaltung, auf einfache Weise zu ermöglichen.

Diese Aufgabe wird bei einer Vorrichtung der eingangs genannten Art durch die kennzeichnenden Merkmale von Anspruch 1 gelöst.

Durch die Lagerung der Zwischenwand an zwei diametral einander gegenüberliegenden Stellen des Zylindermantels im Gehäuse und die insbesondere bogenförmige Herumführung um die Eintrittsöffnung kann in einfacher Weise eine gleichzeitige Abschaltung mehrerer Säschare erfolgen. Durch Verschieben der senkrechten Zwischenwand kann das Gehäuse in zwei voneinander getrennte Kammern aufgeteilt werden. Dabei ist nur eine der Kammern mit dem Förderstrom verbunden, da die Zwischenwand seitlich zur Eintrittsöffnung verläuft. Die im Bereich der anderen Kammer gelegenen Austrittsöffnungen sind dann vom Förderstrom abgetrennt und die zugehörigen Säschare stillgelegt.

Bei einer bevorzugten Ausführungsform ist durch die Zwischenwand die Hälfte der Austrittsöffnungen vom Förderstrom abtrennbar. Dadurch kann auf einfache Weise eine halbseitige Abschaltung ermöglicht werden.

Nach einer weiteren Ausgestaltung der Erfindung ist die Fördermenge bei Abtrennung eines Teils der Austrittsöffnungen vom Förderstrom, insbesondere automatisch, entsprechend reduzierbar. Hierdurch wird gewährleistet, daß durch die mit dem Förderstrom noch verbundenen Austrittsöffnungen keine höhere Menge gefördert wird als vor Abtrennung der anderen Austrittsöffnungen. Die Änderung der Fördermenge kann insbesondere über die Dosiereinrichtung erfolgen, beispielsweise durch ein Reduziergetriebe oder eine Teilabschaltmöglichkeit.

Ein Ausführungsbeispiel der Erfindung ist in der Zeichnung dargestellt und wird nachfolgend beschrieben. Es zeigen, jeweils in schematischer Darstellung,
- Fig. 1: den grundsätzlichen Aufbau einer Dosier- und Verteilanordnung für Saatgut mit erfindungsgemäßer Verteilvorrichtung,
- Fig. 2: eine Draufsicht auf die Verteilvorrichtung von Fig. 1, und
- Fig. 3: eine teilweise geschnittene Seitenansicht der Verteilvorrichtung von Fig. 1.

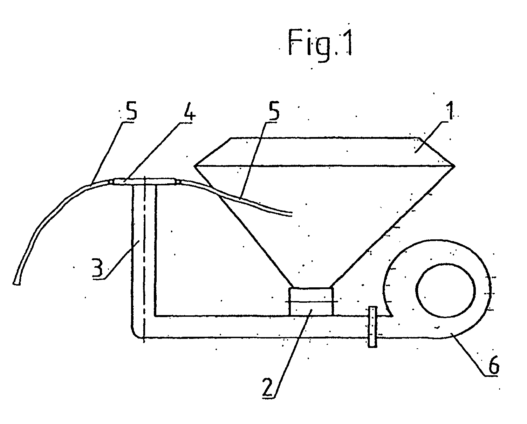

Die in Fig. 1 dargestellte Dosier- und Verteileinrichtung umfaßt einen Saatgutbehälter 1, welcher auf seiner Unterseite trichterförmig ausgebildet ist und in eine Dosiereinrichtung 2 mündet. Die Dosiereinrichtung 2 steht andererseits in Verbindung mit einem Förderrohr 3, welches zu der Verteileinrichtung 4 führt, an die Saatgutleitungen zu den hier nicht dargestellten Säschare angeschlossen sind. An das andere Ende des Förderrohrs 3 ist ein Gebläse 6 angeschlossen, durch welches der Förderstrom im Förderrohr 3 erzeugt wird. Abweichend von Fig. 1 ist es auch möglich, die Verteileinrichtung im Saatgutbehälter 1 anzuordnen.

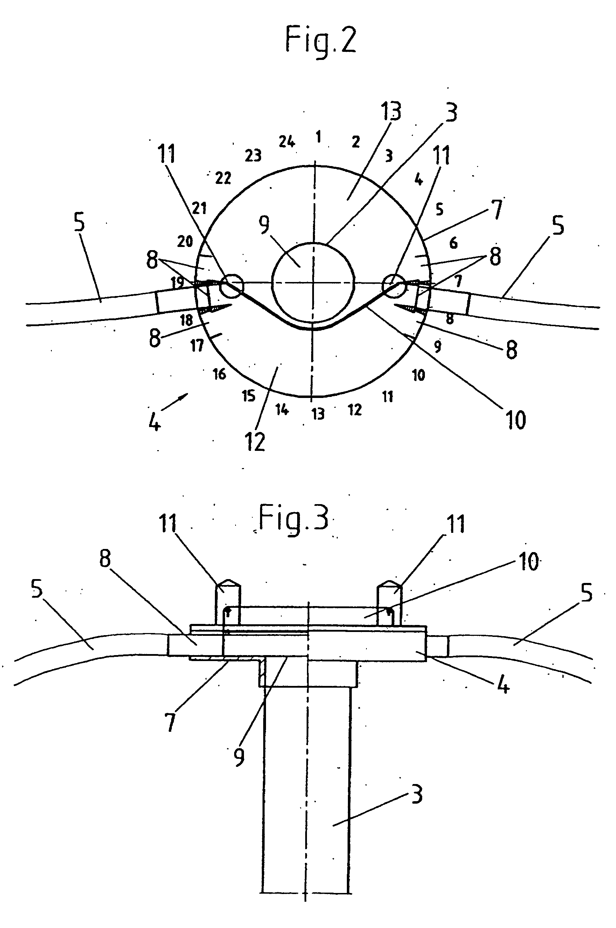

Wie man den Fig. 2 und 3 entnimmt, weist die Verteileinrichtung 4 ein Verteilergehäuse 7 in Form eines flachen Zylinders auf, in dessen Mantel Austrittsöffnungen 8 vorgesehen sind, an welche die Saatgutleitungen 5 zu den Säschare angeschlossen sind. Bei dem dargestellten Ausführungsbeispiel sind insgesamt vierundzwanzig gleichmäßig über den Umfang des Verteilergehäuses 7 verteilte Austrittsöffnungen 8 vorgesehen. In der Mitte der unteren Grundfläche des Verteilergehäuses 7 ist eine Eintrittsöffnung 9 vorhanden, an welche das Förderrohr 3 angeschlossen ist. Die der Eintrittsöffnung 9 gegenüberliegende Wand des Verteilergehäuses 7 wirkt als Prallfläche, an welcher der Förderstrom umgelenkt und gleichmäßig auf die Austrittsöffnungen 8 verteilt wird.

Im Inneren des Verteilergehäuses 7 ist eine Zwischenwand 10 vorhanden, die senkrecht zu den beiden Grundflächen des Verteilergehäuses 7 verläuft und um die Eintrittsöffnung 9 bogenförmig herumgeführt ist. Die Zwischenwand 10 ist in zwei Führungseinrichtungen 11, die an zwei diametral einander gegenüberliegenden Stellen des Verteilergehäuses 7 vorgesehen sind, derart verschiebbar geführt, daß die Zwischenwand 10 zwischen einer vollständig in das Verteilergehäuse 7 eingeschobenen und einer aus dem Verteilergehäuse 7 herausgezogenen Stellung verschiebbar ist. Bei vollständig in das Verteilergehäuse 7 eingeschobener Stellung der Zwischenwand 10 trennt diese dadurch zwei Kammern 12 und 13 im Verteilergehäuse 7 voneinander ab, von denen die eine die Eintrittsöffnung 9 enthält. Bei herausgezogener Zwischenwand 10 sind dagegen beide Kammern 12 und 13 mit der Eintrittsöffnung 9 verbunden.

Im Normalbetrieb der erfindungsgemäßen Vorrichtung ist die Zwischenwand 10 angehoben, so daß beide Kammern 12 und 13 mit der Eintrittsöffnung 9 verbunden sind. Der über die Eintrittsöffnung 9 in das Verteilergehäuse 7 gelangende Förderstrom wird daher gleichmäßig auf die Austrittsöffnungen 8 und damit die daran angeschlossenen Saatgutleitungen 5 verteilt. Alle Säschare erhalten die gleiche Saatgutmenge.

Zur halbseitigen Abschaltung der Säschare wird die Zwischenwand 10 in das Verteilergehäuse 7 vollständig eingeschoben, so daß die Kammer 12 von der Eintrittsöffnung 9 abgetrennt ist und nur noch die Kammer 13 mit der Eintrittsöffnung 9 in Verbindung steht. Alle im Bereich der Kammer 12 an das Verteilergehäuse 7 angeschlossenen Saatgutleitungen 5 erhalten daher keinen Anteil des Förderstromes, das heißt kein Saatgut. Die zugehörigen Säschare sind auf diese Weise stillgelegt. Damit die verbleibenden Saatgutleitungen keine zu große Saatgutmenge erhalten, wird die Fördermenge insgesamt entsprechend halbiert. Dies erfolgt bevorzugt über die Dosiereinrichtung, indem beispielsweise entweder deren Förderkapazität oder deren Fördergeschwindigkeit halbiert wird. Die Umstellung der Dosiereinrichtung kann, ebenso wie das Verschieben der Zwischenwand 10, entweder von Hand oder automatisch gesteuert erfolgen. Die Steuerung kann dabei insbesondere elektrisch, pneumatisch, hydraulisch oder mechanisch, beispielsweise über einen Bowdenzug erfolgen.

Insgesamt wird durch die Erfindung eine kostengünstig herstellbare Verteileinrichtung geschaffen, die in einfacher und störunanfälliger Weise eine teilweise Stillegung von Säschare ermöglicht.

### Bezugszeichenliste

- 1: Saatgutbehälter
- 2: Dosiereinrichtung
- 3: Förderrohr
- 4: Verteileinrichtung
- 5: Saatgutleitung
- 6: Gebläse
- 7: Verteilergehäuse
- 8: Austrittsöffnung
- 9: Eintrittsöffnung
- 10: Zwischenwand
- 11: Führungseinrichtung
- 12: Kammer
- 13: Kammer

## Patentansprüche

1. Vorrichtung zum Verteilen von partikelförmigem Gut aus einem insbesondere pneumatischen Förderstrom auf eine Vielzahl von Teilströmen mit einem Verteilergehäuse (7), welches im wesentlichen die Form eines vertikal ausgerichteten, flachen Zylinders aufweist, in dessen einer Grundseite eine insbesondere zentrale Eintrittsöffnung (9) für den Förderstrom vorgesehen ist, dessen gegenüberliegende Grundseite als Prallfläche für den Förderstrom wirkt und in dessen Mantel im wesentlichen gleichmäßig über den Umfang verteilte Austrittsöffnungen (8) für die Teilströme vorhanden sind, insbesondere für Vorrichtungen zum Ausbringen von Saatgut, Düngemittel- oder anderem Wirkstoffgranulat in der Landwirtschaft, wobei in dem Gehäuse (7) eine bewegliche Zwischenwand (10) vorhanden ist, die senkrecht zu den beiden Grundflächen des Zylinders und seitlich der Eintrittsöffnung (9) zu dem Förderstrom angeordnet und zwischen einer vollständig in das Gehäuse (7) eingeschobenen und einer mindestens teilweise aus dem Gehäuse (7) herausgezogenen Stellung verschiebbar ist, so daß die Zwischenwand (10) in der eingeschobenen Stellung einen Teil der Austrittsöffnungen (8) vom Förderstrom abtrennt, während in der herausgezogenen Stellung alle Austrittsöffnungen (8) mit dem Förderstrom verbunden sind,
**dadurch gekennzeichnet,**
**dass** die Zwischenwand (10) an zwei diametral einander gegenüberliegenden Stellen des Zylindermantels im Gehäuse (7) verschiebbar gelagert und um die Eintrittsöffnung (9) herumgeführt ist.

2. Vorrichtung nach Anspruch 1,
**dadurch gekennzeichnet,**
**dass** die Zwischenwand (10) bogenförmig um die Eintrittsöffnung herumgeführt ist.

3. Vorrichtung nach-Anspruch 1 oder 2,
**dadurch gekennzeichnet,**
**dass** durch die Zwischenwand (10) die Hälfte der Austrittsöffnungen (8) vom Förderstrom abtrennbar ist.

4. Vorrichtung nach einem der vorhergehenden Ansprüche,
**dadurch gekennzeichnet,**
**dass** die Fördermenge bei Abtrennung eines Teils der Austrittsöffnungen (8) vom Förderstrom, insbesondere automatisch, entsprechend reduzierbar ist.

## Claims

1. An apparatus for the distribution of particulate material from a feeding stream, in particular from a pneumatic feeding stream, into a plurality of part streams, comprising a distributor housing (7) which substantially has the shape of a vertically aligned shallow cylinder in whose one base side an inlet opening (9), in particular a central inlet opening, is provided for the feeding stream, whose opposite base side acts as an impact surface for the feeding stream and in whose jacket discharge openings (8), which are distributed substantially evenly over the periphery, are provided for the part streams, in particular for apparatuses for the spreading of seed, fertiliser granulate or other active material granulate in agriculture, wherein a movable intermediate wall (10) is present in the housing (7) and is arranged perpendicular to the two base surfaces of the cylinder and to the side of the inlet opening (9) relative to the feeding stream and is displaceable between a position completely pushed into the housing (7) and a position at least partly pulled out of the housing (7) such that the intermediate wall (10) separates some of the discharge openings (8) from the feeding stream in the pushed-in position, whereas all discharge openings (8) are connected to the feeding stream in the pulled-out position.
**characterised in that** the intermediate wall (10) is displaceably supported in the housing (7) at two positions of the cylinder jacket diametrically opposed to one another and is led around the inlet opening (9).

2. An apparatus in accordance with claim 1, **characterised in that** the intermediate wall (10) is led around the inlet opening in the form of an arc.

3. An apparatus in accordance with claim 1 or claim 2, **characterised in that** half the discharge openings (8) can be separated from the feeding stream by the intermediate wall (10).

4. An apparatus in accordance with any one of the preceding claims, **characterised in that** the discharge can be reduced appropriately, in particular automatically, on the separation of some of the discharge openings (8) from the feeding stream.

## Revendications

1. Dispositif pour répartir des matériaux en particules à partir d'un courant de convoyage en particulier pneumatique en une multitude de courants partiels, comportant un boîtier répartiteur (7) qui présente sensiblement la forme d'un cylindre plat orienté verticalement, dont l'une des faces de base présente une ouverture d'entrée (9) en particulier centrale pour le courant de convoyage, dont la face de base opposée fait office de surface d'impact pour le courant de convoyage et dont l'enveloppe présente des ouvertures de sortie (8) sensiblement en répartition régulière sur la périphérie pour les courants partiels, en particulier pour des dispositifs pour éjecter des semences, de l'engrais ou d'autres substances en granulés dans le domaine agricole, une paroi intermédiaire mobile (10) étant prévue dans le boîtier (7), qui est agencée perpendiculairement aux deux surfaces de base du cylindre et latéralement à côté de l'ouverture d'entré (9) pour le courant de convoyage et qui est mobile en translation entre une position complètement introduite dans le boîtier (7) et une position extraite au moins partiellement hors du boîtier (7), de sorte que dans la position introduite, la paroi intermédiaire (10) sépare une partie des ouvertures de sortie (8) vis-à-vis du courant de convoyage, tandis que dans la position extraite, toutes les ouvertures de sortie (8) sont en communication avec le courant de convoyage,
**caractérisé en ce que**
la paroi intermédiaire (10) est montée mobile en translation dans le boîtier (7) à deux emplacements diamétralement opposés de l'enveloppe cylindrique et est menée autour de l'ouverture d'entrée (9).

2. Dispositif selon la revendication 1, **caractérisé en ce que** la paroi intermédiaire (10) est menée en forme d'arc autour de l'ouverture d'entrée.

3. Dispositif selon l'une ou l'autre des revendications 1 et 2, **caractérisé en ce que** la moitié des ouvertures de sortie (8) est susceptible d'être séparée du courant de convoyage par la paroi intermédiaire (10).

4. Dispositif selon l'une des revendications précédentes, **caractérisé en ce que** lors d'une séparation d'une partie des ouvertures de sortie (8) vis-à-vis du courant de convoyage, la quantité convoyée peut être réduite en correspondance, en particulier de façon automatique.
